# EUROPÄISCHE PATENTANMELDUNG

(11) **EP 1 063 129 A2**
(43) Veröffentlichungstag der Anmeldung: **27.12.2000**
(21) Anmeldenummer: 00112687.9
(22) Anmeldetag: 15.06.2000
(51) Int. Cl.: B60R 11/02

(54) **Halteelement für ein Fernbedienungselement sowie Fernbedienungselement**

(30) Priorität: 25.06.1999 DE 29910846 U
(71) Anmelder: Voit, Stefan, 66386 St.Ingbert (DE)
(72) Erfinder: Voit, Stefan, 66386 St.Ingbert (DE)
(74) Vertreter: Vièl, Christof, Dipl.-Ing.

(57) **Zusammenfassung**

Die Erfindung betrifft ein Halteelement (1) zur Halterung eines Fernbedienungselements (2) zur Bedienung von Aggregaten in einem Kraftfahrzeug. Das Fernbedienungselement wird in dem Halteelement drehbar gehalten. Das Fernbedienungselement kann somit aufgrund der Drehbarkeit des Halteelements in einer für den Benutzer als aufrecht wahrnehmbaren Orientierung positioniert werden. Weiterhin ist das Halteelement und somit auch das Fernbedienungselement variabel befestigbar.

## Beschreibung

Die Erfindung betrifft ein Halteelement zur Halterung eines Fernbedienungselements zur Bedienung von Aggregaten in einem Kraftfahrzeug nach dem Oberbegriff des Patentanspruchs 1 sowie ein Fernbedienungselement zur Halterung in bzw. an dem Halteelement nach den Ansprüchen 4 und 5.

Es sind Fernbedienungselemente in Fahrzeugen bekannt, die beispielsweise zur Bedienung von Audioanlagen vorgesehen sind. Diese Fernbedienungselemente sind im wesentlichen lose und dienen dazu, den im Fond des Fahrzeugs sitzenden Fahrzeuginsassen die Bedienung von Aggregaten des Fahrzeugs zu ermöglichen. Mittels solcher Fernbedienungen läßt sich beispielsweise auch die Sitzposition von einem oder mehreren Fahrzeugsitzen einstellen.

Weiterhin sind Bedienungselemente bekannt, die von den Fahrzeugherstellern am Lenkrad angebracht werden. Dadurch soll es dem Fahrzeugführer ermöglicht werden, beispielsweise eine Bedienung einer Audioanlage vorzunehmen und gleichzeitig mit beiden Händen das Lenkrad zu halten. Es sind dann also am Lenkrad Bedienelemente für die Einstellung der Lautstärke, die Senderwahl eines Radios, die Titelwahl eines CD-Abspielgerätes bzw. eines CD-Wechslers und ähnliches vorgesehen. Es können auch weitere Bedienelemente vorgesehen sein, wie beispielsweise für die Einstellung der Wischgeschwindigkeit eines Scheibenwischers oder ähnliches. Diese Bedienungselemente sind üblicherweise verdrahtet.

Der vorliegenden Erfindung liegt die Aufgabe zugrunde, die Anordnung von Bedienelementen zu verbessern.

Diese Aufgabe wird erfindungsgemäß gelöst, indem das Fernbedienungselement in dem Halteelement drehbar gehalten wird.

Dadurch wird vorteilhaft erreicht, daß das Fernbedienungselement unabhängig vom Anbringungsort des Halteelements für den Benutzer keine seitliche Neigung aufweist. Dies erweist sich insofern als vorteilhaft, als in Fahrzeugen üblicherweise Flächen mit unterschiedlichen Neigungen vorhanden sind beispielsweise im Bereich des Mitteldomes oder des Armaturenbretts. Unabhängig von dem Ort, an dem das Halteelement befestigt wird, beispielsweise mittels einer Verschraubung oder einer Verklebung, kann das Fernbedienungselement aufgrund dessen Drehbarkeit in einer für den Benutzer als aufrecht wahrnehmbaren Orientierung positioniert werden. In Verbindung mit der Flexibilität der Positionierung erweist es sich weiterhin als vorteilhaft, daß die Bedienung der Aggregate über ein Fernbedienungselement erfolgt, weil dann keine Verdrahtung notwendig ist. Dadurch wird wiederum die Flexibilität der Positionierung des Halteelements unterstützt.

Nach Anspruch 2 ist das Halteelement mittels einer Schelle oder eines Clips befestigbar.

Dadurch kann das Halteelement und damit auch das Fernbedienungselement am Lenkrad des Kraftfahrzeugs befestigt werden. Das Fernbedienungselement ist dann für den Fahrzeugführer gut erreichbar. Besonders vorteilhaft erweist sich dabei durch die Drehbarkeit des Fernbedienungselements, daß dieses unabhängig von dem Anbringungsort am Lenkrad in dessen Geradeausstellung immer in einer für den Benutzer als aufrecht wahrnehmbaren Orientierung positioniert werden kann. Der Anbringungsort des Halteelements kann dann beispielsweise abhängig von den Speichen des Lankrads gewählt werden. Ebenso kann berücksichtigt werden, ob der Fahrzeugführer Links- oder Rechtshänder ist. Durch die Drehbarkeit des Fernbedienungselements gegenüber dem Halteelement sind verschiedenste Anbringungsmöglichkeiten realisierbar.

Nach Anspruch 3 wird das Fernbedienungselement lösbar in dem Halteelement gehalten.

Dadurch wird es beispielsweise möglich, im Fond des Fahrzeugs mitfahrenden Fahrzeuginsassen eine eigenständige Bedienung einer Audioanlage zu ermöglichen. Gleichzeitig gibt es einen definierten Aufbewahrungsort für das Fernbedienungselement in dem Halteelement, wobei es dort vorteilhaft einfach vom Fahrzeugführer bedienbar ist, wenn das Halteelement am Lenkrad angebracht ist.

Nach Anspruch 4 ist ein Fernbedienungselement zur Halterung in einem vorbeschriebenen Halteelement zumindest im wesentlichen kreisförmig ausgebildet.

Dadurch kann die Drehbarkeit des Fernbedienungselements vorteilhaft einfach realisiert werden.

Nach Anspruch 5 weist das Fernbedienungselement wenigstens zwei Abstrahlelemente auf, die in verschiedene Raumrichtungen abstrahlen.

Dadurch steht an dem entsprechenden Empfänger für die abgestrahlten Signale der Fernbedienung unabhängig vom Anbringungsort der Fernbedienung immer eine genügende Sendeleistung der zu empfangenden Signale zur Verfügung.

Die Fernbedienung kann in an sich bekannter Weise beispielsweise mittels Infrarot oder Ultraschallwellen arbeiten.

Ein Ausführungsbeispiel der Erfindung ist in der Zeichnung dargestellt. Es zeigt dabei:
Fig. 1: eine Darstellung des Fernbedienungselements,
Fig. 2: eine Darstellung des Fernbedienungselements als Explosionsdarstellung,
Fig. 3: ein Halteelement mit einem Fernbedienungselement und
Fig. 4: Beispiele für die Anbringung des Halteelements an einem Lenkrad eines Kraftfahrzeugs.

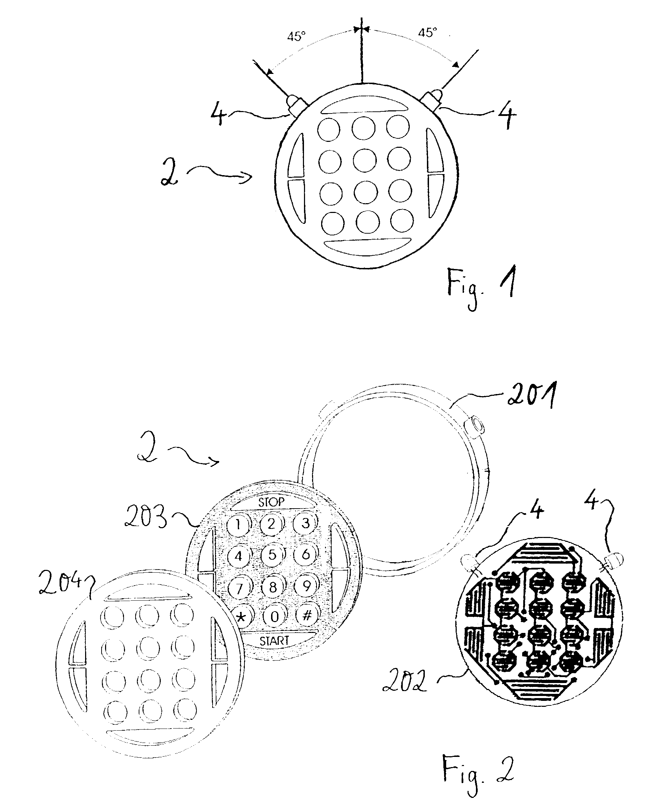

Figur 1 zeigt eine Darstellung des Fernbedienungselements 2. Dieses Fernbedienungselement 2 weist verschiedene Tasten auf, mit denen Aggregate des Kraftfahrzeugs bedienbar sind. Weiterhin ist zu sehen, daß an dem Fernbedienungselement 2 zwei Abstrahlelemente 4 angebracht sind, die zueinander in einem Winkel von 90° stehen. Dadurch ist weitgehend unabhängig von einer Verdrehung des Fernbedienungselements 2 sichergestellt, daß die von dem Fernbedienungselement 2 ausgesandten Signale von dem Empfänger des jeweiligen Aggregats empfangbar sind. Aufgrund der Kreisform des Fernbedienungselements 2 ergibt sich eine einfache Verdrehbarkeit des Fernbedienungselements 2 gegenüber dem Halteelement 1, so daß das Fernbedienungselement 2 immer optimal positionierbar ist, unabhängig vom Anbringungsort des Halteelements 1.

Figur 2 zeigt eine Explosionsdarstellung des Fernbedienungselements 2 mit einem Gehäuse 201, in das ein Schaltkreis 202 einbringbar ist, an dem als Abstrahlelemente 4 zwei Infrarot-LEDs angebracht sind. Weiterhin ist eine auf diesen Schaltkreis 202 einwirkende Tastaturplatte 203 zu sehen. Das Gehäuse 201 wird dann mit einer Abdeckung 204 verschlossen.

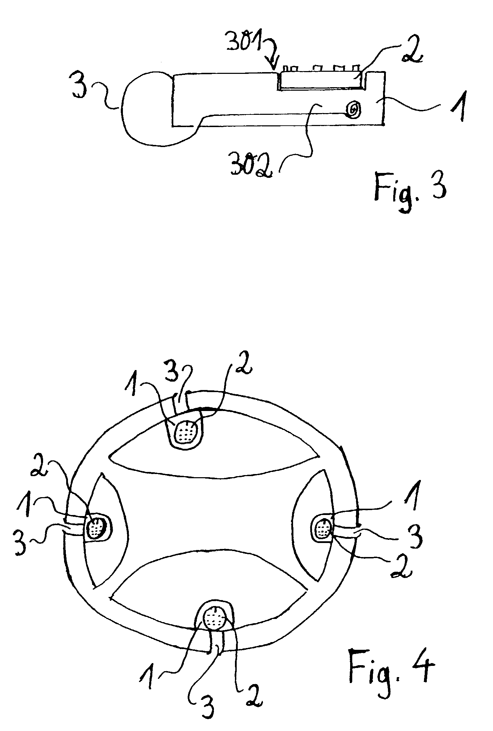

Figur 3 zeigt eine Halteelement 1 mit einem Fernbedienungselement 2 in einem seitlichen Schnitt. Es ist zu sehen, daß an dem Halteelement 1 eine Schelle 3 angebracht ist, mit der das Halteelement 1 an einem Lenkrad eines Fahrzeugs befestigbar ist. Weiterhin ist zu sehen, daß das Halteelement 1 in dem in Figur 3 gezeigten Ausführungsbeispiel eine Ausnehmung 301 aufweist, in der das Fernbedienungselement 2 gehalten wird. Vorteilhaft ist diese Ausnehmung kreisförmig, so daß das Fernbedienungselement 2 gegenüber dem Halteelement 1 drehbar ist. Weiterhin ist zu sehen, daß das Halteelement 1 unter der Ausnehmung 301 einen Aufnahmeraum 302 aufweist, in den beispielsweise Material der Schelle 3 aufgenommen wird, wenn diese zur Befestigung gespannt wird. Anstelle der Schelle 3 kann das Halteelement 1 beispielsweise auch mittels eines Clips befestigt werden. Ebenso ist es auch möglich, daß das Halteelement 1 beispielsweise eine Trägerplatte aufweist, über die das Halteelement auf einer entsprechend geformten, beispielsweise ebenen Fläche aufklebbar oder verschraubbar ist. Es wird dann auch eine Befestigung im Bereich des Mitteldoms des Kraftfahrzeugs oder am Armaturenbrett realisierbar. Es ist auch möglich, für das Fernbedienungselement 2 keine Ausnehmung 301 vorzusehen sondern dieses beispielsweise an einem Punkt zu befestigen. Dies erweist sich dann als vorteilhaft, wenn das Fernbedienungselement 2 gegenüber dem Halteelement 1 lösbar ist. Nach einer Entnahme des Fernbedienungselements 2 weist das Halteelement 1 dann eine deutlich geringere Baugröße auf als das in Figur 3 dargestellte Halteelement 1, dessen äußere Form größer ist als das Fernbedienungselement 2. Das Fernbedienungselement 2 wird dann also nicht in dem Halteelement 1 sondern an dem Halteelement 1 befestigt.

Figur 4 zeigt verschiedene Anbringungsorte des Halteelements 1 am Lenkrad. Aufgrund der Drehbarkeit des Fernbedienungselements 2 gegenüber dem Halteelement 1 kann dieses für den Benutzer immer so orientiert werden, daß die 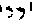 Spalten" und 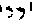 Reihen" der einzelnen Tasten immer dieselben sind. Ebenso kann aufgrund dieser Drehbarkeit des Fernbedienungselements 2 eine Beschriftung der einzelnen Tasten immer lesbar sein.

In der Darstellung der Figur 4 wurde an dem Fernbedienungselement 2 am oberen Abschnitt eine Markierung angebracht, um die aufrechte Orientierung zu verdeutlichen, die durch die Drehbarkeit des Fernbedienungselements 2 gegenüber dem Halteelement 1 erreicht wird unabhängig von dem momentanen Anbringungsort des Halteelements 1.

Mittels des Fernbedienungselements 2 kann beispielsweise eine Audioanlage, ein Telefon mit einer Freisprecheinrichtung oder andere Aggregate des Kraftfahrzeugs bedient werden.

## Patentansprüche

1. Halteelement (1) zur Halterung eines Fernbedienungselements (2) zur Bedienung von Aggregaten in einem Kraftfahrzeug, **dadurch gekennzeichnet**, dass das Fernbedienungselement (2) in bzw. an dem Halteelement (1) drehbar gehalten wird.

2. Halteelement nach Anspruch 1, **dadurch gekennzeichnet**, dass das Halteelement (1) mittels einer Schelle oder eines Clips (3) befestigbar ist.

3. Halteelement nach Anspruch 1 oder 2, **dadurch gekennzeichnet**, dass das Fernbedienungselement (2) lösbar in bzw. an dem Halteelement (1) gehalten wird.

4. Fernbedienungselement zur Halterung in bzw. an einem Halteelement nach einem der vorhergehenden Ansprüche, **dadurch gekennzeichnet**, dass das Fernbedienungselement (2) zumindest im wesentlichen kreisförmig ausgebildet ist.

5. Fernbedienungselement zur Halterung in bzw. an einem Halteelement nach einem der vorhergehenden Ansprüche, **dadurch gekennzeichnet**, dass das Fernbedienungselement (2) wenigstens zwei Abstrahlelemente (4) aufweist, die in verschiedene Raumrichtungen abstrahlen.
